# FASCICULE DE BREVET EUROPEEN

(11) **EP 4 288 854 B1**
(45) Date de publication et mention de la délivrance du brevet: **25.02.2026**
(21) Numéro de dépôt: 22702762.0
(22) Date de dépôt: 12.01.2022
(51) Int. Cl.: G06F 1/14, H04W 56/00, H04J 3/06, H04J 3/14

(54) **PROCÉDÉ ET DISPOSITIF DE VALIDATION DE SYNCHRONISATION TEMPORELLE ENTRE CALCULATEURS EMBARQUÉS DE VÉHICULE**
VERFAHREN UND VORRICHTUNG ZUR VALIDIERUNG DER ZEITSYNCHRONISATION ZWISCHEN FAHRZEUGBORDCOMPUTERN
METHOD AND DEVICE FOR VALIDATING TIME SYNCHRONIZATION BETWEEN VEHICLE ON-BOARD COMPUTERS

(30) Priorité: 08.02.2021 FR 2101168
(43) Date de publication de la demande: 13.12.2023
(73) Titulaire: Stellantis Auto SAS, 78300 Poissy (FR)
(72) Inventeur: MORAND, Nicolas, 92400 COURBEVOIE (FR)
(74) Mandataire: ESIP
(86) Numéro de dépôt international: PCT/FR2022/050064
(87) Numéro de publication internationale: WO 2022/167740

(56) Documents cités:
- EP-A1- 2 993 816
- FR-A1- 2 976 432
- US-A1- 2017 026 144

## Description

La présente invention revendique la priorité de la demande française 2101168 déposée le 08.02.2021.

### Domaine technique

L'invention concerne la connectivité et les services de véhicules intelligents notamment les véhicules autonomes. En particulier, l'invention concerne la validation de synchronisation temporelle entre calculateurs synchronisés temporellement par un réseau de communication.

### Arrière-plan technologique

Le développement des technologies dans le domaine automobile permet aujourd'hui de concevoir, par exemple, des systèmes d'aide à la conduite de véhicules, éventuellement autonomes, qui tiennent compte de l'environnement routier dans lequel circulent ces véhicules, des systèmes de freinage d'urgence ou encore des systèmes de régulation de vitesse qui s'adaptent à l'environnement d'un véhicule.

Plusieurs calculateurs sont embarqués pour mettre en œuvre ces systèmes. Des éléments d'un calculateur, individuellement ou en combinaison, peuvent être intégrés dans un unique circuit intégré, dans plusieurs circuits intégrés, et/ou dans des composants discrets. Un calculateur peut être réalisé sous la forme de circuits électroniques ou de modules logiciels (ou informatiques) ou encore d'une combinaison de circuits électroniques et de modules logiciels. Un calculateur peut aussi entrer en communication avec un organe du véhicule tels qu'une caméra ou un capteur par exemple. Cet organe et ce calculateur doivent alors aussi être synchronisés temporellement.

Certains des calculateurs (organes) embarqués d'un véhicule communiquent entre eux via un (voir plusieurs) réseaux de communication mis en œuvre par un (voire plusieurs) bus de donnée typiquement de type CAN (Controller Area Network en anglais), FlexRay ou Ethernet automobile.

On connait par le document EP 2993816 A1 un procédé et un appareillage permettant d'échanger des messages dans un système de réseau. On connait par le document US 2017/026144 A1 un procédé et un dispositif de validation d'un horodatage d'une transmission de données. On connait par le document FR 2976432 A1 un dispositif de résolution d'encombrement au sein d'un réseau de communication, par recalage temporel global des instants de production de bits de message des organes communicants.

Les communications entre calculateurs (organes) à travers un (voire) plusieurs réseaux de communication requièrent dans certains cas une synchronisation temporelle précise des calculateurs (organes) entre eux. Toutefois, les calculateurs et/ou les organes embarqués d'un véhicule peuvent ne pas être correctement synchronisés temporellement au fil du temps. Il est donc nécessaire de valider que ces calculateurs et/ou organes soient toujours synchronisés temporellement entre eux pour un bon fonctionnement des systèmes mis en œuvre dans un véhicule.

### Résumé de l'invention

Un objet de la présente invention est de valider la synchronisation temporelle de calculateurs embarqués d'un véhicule.

Selon un premier aspect, l'invention concerne un procédé de validation de la synchronisation temporelle entre calculateurs embarqués d'un véhicule, tel que défini dans la revendication 1.

Selon un deuxième aspect, l'invention concerne un système de validation de synchronisation temporelle entre calculateurs embarqués d'un véhicule, le système comprenant une mémoire associée à un processeur configuré pour la mise en œuvre des étapes du procédé selon le premier aspect de l'invention.

Selon un exemple de réalisation particulier, un calculateur comporte une interface de sortie dédiée à l'émission du signal.

Selon un troisième aspect, l'invention concerne un véhicule, notamment autonome, par exemple de type automobile, comprenant un système tel que décrit ci-dessus selon le deuxième aspect de l'invention.

### Brève description des figures

D'autres caractéristiques et avantages de l'invention ressortiront de la description des modes de réalisation non limitatifs de l'invention ci-après, en référence aux figures 1 à 3 annexées, sur lesquelles :
[Fig. 1] illustre schématiquement un environnement de synchronisation temporelle entre calculateurs embarqués d'un véhicule, selon un exemple de réalisation particulier de la présente invention ;
[Fig. 2] illustre un organigramme des différentes étapes d'un procédé de validation de synchronisation temporelle entre calculateurs embarqués d'un véhicule, selon un exemple de réalisation particulier de la présente invention ; et
[Fig. 3] illustre schématiquement un dispositif de validation de synchronisation temporelle entre calculateurs embarqués d'un véhicule, selon un exemple de réalisation particulier de la présente invention.

### Description des modes de réalisation

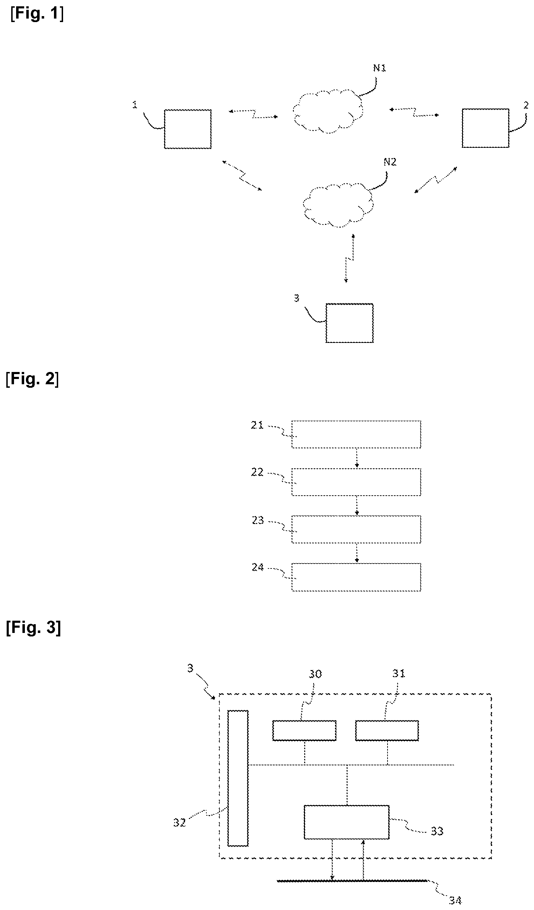

Un procédé et un dispositif de vont maintenant être décrits dans ce qui va suivre en référence conjointement aux figures 1 à 3. Des mêmes éléments sont identifiés avec des mêmes signes de référence tout au long de la description qui va suivre.

Selon l'invention, la validation de la synchronisation temporelle entre calculateurs synchronisés temporellement par un réseau de communication est mise en œuvre par comparaison d'écarts temporels entre signaux émis par ces calculateurs avec une valeur limite au-delà de laquelle il est considéré que ces calculateurs ne sont plus synchronisés temporellement entre eux.

L'invention peut être mise en œuvre, par exemple, lors de test d'endurance dans le temps, de test en température, de test de comparaison entre plusieurs exemplaires de calculateurs et/ou de leurs logiciels afin de rendre une bonne couverture de ces tests.

[Fig. 1] illustre schématiquement un environnement de synchronisation temporelle entre calculateurs embarqués d'un véhicule, selon un exemple de réalisation particulier de la présente invention.

Selon la [Fig. 1], deux calculateurs 1 et 2 sont synchronisés temporellement entre eux par un réseau de communication N1. L'invention n'est pas limitée à la validation de la synchronisation temporelle entre de deux calculateurs (ou organes) mais s'étend à la validation de synchronisation temporelle d'un nombre quelconque de calculateurs (organes).

Lorsque la synchronisation temporelle entre plusieurs calculateurs (ou organes) doit être validée, la validation peut se faire par sous-groupes de deux calculateurs ou plus en utilisant un dispositif 3 alors adaptés au nombre de calculateurs de chaque sous-groupe.

Les calculateurs 1 et 2 sont en communication avec un dispositif de validation de synchronisation temporelle 3 via un réseau de communication N2.

Selon une variante les réseaux de communication N1 et N2 sont un même réseau de communication.

Selon une autre variante, les réseaux de communication N1 et N2 sont distincts.

Dans une première opération, chaque calculateur 1 et 2 émet un signal à des instants prédéfinis à destination du dispositif de validation de synchronisation temporelle 3.

Dans une deuxième opération, le dispositif 3 réceptionne le signal émis par chaque calculateur 1 et 2.

Dans une troisième opération, le dispositif 3 mesure au moins un écart temporel entre les signaux reçus.

Dans une quatrième opération, le dispositif 3 déclenche une alerte quand ledit au moins un écart temporel dépasse une valeur critique. Dans ce cas les calculateurs 1 et 2 sont considérés comme n'étant plus synchronisés temporellement.

Selon une variante, une moyenne sur plusieurs écarts temporels mesurés est calculée et l'alarme est déclenchée lorsque cette moyenne dépasse une valeur critique.

Selon un exemple de réalisation particulier, la valeur critique peut être de quelques micro secondes.

Selon un exemple de réalisation particulier, l'alarme est sonore et/ou visuelle.

Selon un exemple de réalisation particulier, l'alarme est un signal émis par le dispositif 3 à destination d'un dispositif externe tel qu'un serveur de donnée, un ordinateur, un écran ou tout autre dispositif électronique par exemple.

Selon un exemple de réalisation particulier, le signal émis par les calculateur 1 et 2 est un signal électrique, par exemple une tension de forme carrée, dont les changements d'état (fronts montants et descendants) correspondent à des instants convenus, par exemple, par des horloges synchronisées des calculateurs 1 et 2 (par exemple UTC). Par exemple, à chaque seconde correspond un front montant.

Ainsi, lorsque les calculateurs 1 et 2 sont synchronisés temporellement entre eux les fronts montants et/ou descendants de ces signaux carrés sont alignés temporellement. Dès qu'un écart temporel entre des fronts montants (et/ou descendants) des signaux reçus dépasse une valeur de seuil, alors l'alarme est déclenchée.

En variante, une moyenne des écarts temporels calculée sur un intervalle de temps doit dépasser une valeur de seuil pour déclencher l'alarme.

Selon un exemple de réalisation particulier, le calculateur 1 et/ou 2 émet(tent) le signal par une interface de sortie qui est dédiée à la validation de la synchronisation temporelle.

En variante, le calculateur 1 et/ou 2 émet(tent) le signal par une interface de sortie qui est dédiée à la validation de la synchronisation temporelle pour certaines versions du calculateur 1 (et/ou 2) par exemple dites "de développement" ou par une interface de sortie de pilotage de LED (Light Emitting Diode en anglais, diode électroluminescente en français) de carte d'évaluation en se connectant en parallèle de ladite LED.

Selon un exemple de réalisation particulier, le signal émis par un calculateur est généré de façon logicielle.

Selon un exemple de réalisation particulier, le signal émis par un calculateur est généré par bagotement d'une sortie dudit calculateur en quelques instructions (par exemple en assembleur) au début du traitement d'une interruption logicielle relative à la gestion du temps avec un bon niveau de priorité.

Selon un exemple de réalisation particulier, le signal émis par un calculateur est généré par un circuit logique de type EPLD (Erasable Programmable Logic Device en anglais) tel que GAL (Generic array logic en anglais) ou encore FPGA (Field-programmable Gate Array).

Selon un exemple de réalisation particulier, un signal a une autre fonction que celle de validation de synchronisation temporelle.

Selon un exemple de réalisation particulier, le signal émis par un calculateur est généré par un dispositif externe audit calculateur sur la base de signaux émis par ledit calculateur audit dispositif externe. Le dispositif externe et le calculateur peuvent être connectés par un bus de données par exemple de type SPI (Serial Peripheral Interface en anglais, bus de données série synchrone en français) ou I2C (Inter-Integrated Circuit en anglais).

Selon un exemple de réalisation particulier, l'un des signaux reçus est émis par un calculateur de référence avec lequel au moins un autre calculateur doit être synchronisé.

En Plan de Test Unitaire (PTU), le calculateur testé, par exemple 1, peut par exemple être mis en réseau avec un calculateur de référence dont les fonctions afférentes sont déjà validées ou avec un outil de test réalisant ces fonctions.

[Fig. 2] illustre un organigramme des différentes étapes d'un procédé de validation de synchronisation temporelle entre calculateurs embarqués d'un véhicule, selon un exemple de réalisation particulier de la présente invention.

Dans une première étape 21, chaque calculateur 1 et 2 émet un signal à des instants prédéfinis à destination du dispositif 3.

Dans une deuxième étape 22, le dispositif 3 réceptionne le signal émis par chaque calculateur 1 et 2.

Dans une troisième étape 23, le dispositif 3 mesure au moins un écart temporel entre les signaux reçus.

Dans une quatrième étape 24, le dispositif 3 déclenche une alerte quand ledit au moins une écart temporel dépasse une valeur critique.

[Fig. 3] illustre schématiquement un dispositif 3 de validation de synchronisation temporelle entre calculateurs embarqués d'un véhicule, selon un exemple de réalisation particulier de la présente invention.

Le dispositif 3 correspond par exemple à un dispositif embarqué dans un véhicule, par exemple un calculateur ou être un dispositif externe connecté au véhicule.

Le dispositif 3 est par exemple configuré pour la mise en œuvre des opérations décrites en regard la figure 2. Des exemples d'un tel dispositif 3 comprennent, sans y être limités, un équipement électronique tel qu'un oscilloscope multivoie, un ordinateur de bord du véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels. Selon différents modes de réalisation particuliers, le dispositif 3 est couplé en communication avec les calculateurs 1 et 2 et d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Le dispositif 3 comprend un (ou plusieurs) processeur(s) et/ou contrôleur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon un mode de réalisation particulier, le dispositif 3 comprend un bloc 32 d'éléments d'interface pour communiquer avec des dispositifs externes, par exemple un serveur distant ou le « cloud », et les calculateurs 1 et 2. Les éléments d'interface du bloc 32 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;

Des données sont par exemples chargées de et vers le dispositif 3 via l'interface du bloc 32 en utilisant un réseau Wi-Fi^{®} tel que selon IEEE 802.11, un réseau ITS G5 basé sur IEEE 802.11p ou un réseau mobile tel qu'un réseau 4G (ou LTE Advanced selon 3GPP release 10 - version 10) ou 5G, notamment un réseau LTE-V2X.

Selon un autre mode de réalisation particulier, le dispositif 3 comprend une interface de communication 33 qui permet d'établir une communication avec d'autres dispositifs (tels que d'autres calculateurs du système embarqué) et/ou les calculateurs 1 et 2 via un canal de communication 34. L'interface de communication 33 correspond par exemple à un transmetteur configuré pour transmettre et recevoir des informations et/ou des données via le canal de communication 34. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un mode de réalisation particulier supplémentaire, le dispositif 3 peut fournir des alarmes sous forme de signaux à un ou plusieurs dispositifs externes, tels qu'un écran d'affichage, un ou des haut-parleurs et/ou d'autres périphériques via respectivement des interfaces de sortie.

Selon une variante de réalisation, les variantes et exemples des opérations décrits en relation avec la figure 1 s'appliquent aux étapes du procédé de la figure 2.

L'invention concerne également un véhicule, par exemple automobile ou plus précisément un véhicule autonome à moteur terrestre, comprenant le dispositif 3 de la figure 3.

## Revendications

1. Procédé de validation de la synchronisation temporelle entre calculateurs embarqués d'un véhicule comprenant les étapes suivantes :
- émission (21) par chacun des calculateurs (1, 2) d'un signal à des instants prédéfinis ;
- réception (22), par un dispositif (3) de validation de synchronisation temporelle, du signal émis par chacun des calculateurs ;
- mesure (23), par le dispositif de validation de synchronisation temporelle, d'au moins un écart temporel entre les signaux reçus ; et
- déclenchement (24), par le dispositif de validation de synchronisation temporelle, d'une alarme quand ledit au moins écart temporel dépasse une valeur critique ;
procédé dans lequel le signal émis par un calculateur est généré par bagotement d'une sortie dudit calculateur.

2. Système de validation de synchronisation temporelle entre calculateurs embarqués d'un véhicule, ledit système comprenant les calculateurs embarqués (1, 2), un dispositif (3) de validation de synchronisation temporelle, une mémoire associée à au moins un processeur (30), ledit système étant configuré pour la mise en œuvre des étapes du procédé selon la revendication 1.

3. Système selon la revendication 2, pour lequel un calculateur (1, 2) comporte une interface de sortie dédiée à l'émission du signal.

4. Véhicule comprenant le système selon la revendication 3.

## Patentansprüche

1. Ein Verfahren zur Überprüfung der Zeitsynchronisation zwischen den Bordcomputern eines Fahrzeugs umfasst folgende Schritte:
- Aussendung (21) eines Signals durch jeden der Computer (1, 2) zu vordefinierten Zeitpunkten;
- Empfang (22) des von jedem Computer ausgesendeten Signals durch eine Zeitsynchronisations-Validierungsvorrichtung (3);
- Messung (23) mindestens einer Zeitdifferenz zwischen den empfangenen Signalen durch die Zeitsynchronisations-Validierungsvorrichtung; und
- Auslösen (24) eines Alarms durch die Zeitsynchronisations-Validierungsvorrichtung, wenn die mindestens eine Zeitdifferenz einen kritischen Wert überschreitet;
ein Verfahren, bei dem das von einem Computer ausgesendete Signal durch Manipulation eines Ausgangssignals dieses Computers erzeugt wird.

2. Zeitsynchronisationsvalidierungssystem zwischen Bordcomputern eines Fahrzeugs, wobei das System die Bordcomputer (1, 2), eine Zeitsynchronisationsvalidierungsvorrichtung (3) und einen Speicher umfasst, der mindestens einem Prozessor (30) zugeordnet ist, wobei das System für die Durchführung der Schritte des Verfahrens nach Anspruch 1 konfiguriert ist.

3. System nach Anspruch 2, wobei ein Computer (1, 2) eine Ausgabeschnittstelle zur Signalausgabe aufweist.

4. Fahrzeug, umfassend das System nach Anspruch 3.

## Claims

1. A method for validating the time synchronization between on-board computers of a vehicle comprising the following steps:
- emission (21) by each of the computers (1, 2) of a signal at predefined times;
- reception (22), by a time synchronization validation device (3), of the signal emitted by each of the computers;
- measurement (23), by the time synchronization validation device, of at least one time difference between the received signals; and
- triggering (24), by the time synchronization validation device, of an alarm when said at least one time difference exceeds a critical value;
a method in which the signal emitted by a computer is generated by tinkering with an output of said computer.

2. Time synchronization validation system between on-board computers of a vehicle, said system comprising the on-board computers (1, 2), a time synchronization validation device (3), a memory associated with at least one processor (30), said system being configured for the implementation of the steps of the method according to claim 1.

3. System according to claim 2, wherein a computer (1, 2) includes an output interface dedicated to signal emission.

4. Vehicle comprising the system according to claim 3.
